# EUROPEAN PATENT APPLICATION

(11) **EP 4 804 042 A1**
(43) Date of publication of application: **09.09.2026**
(21) Application number: 26160993.7
(22) Date of filing: 26.02.2026
(51) Int. Cl.: G06F 13/16, G06F 13/28, G06F 13/38, G06F 13/40

(54) **DATA PROCESSING SYSTEM HAVING A SPLIT TRANSACTION INTERCONNECT IN COMMUNICATION WITH A PERIPHERAL FIRST-IN FIRST-OUT (FIFO) STRUCTURE**

(30) Priority: 03.03.2025 IN 202541018407
(71) Applicant: NXP USA, Inc., Austin, TX 78735 (US)
(72) Inventor: Marshall, Ray Charles, 5656AG Eindhoven (NL); Goel, Himanshu, 5656AG Eindhoven (NL); Gerster, Jochen Martin, 5656AG Eindhoven (NL)
(74) Representative: Schwarzweller, Thomas

(57) **Abstract**

A data processing system (100) includes a requestor (104), a split transaction interconnect (102), and address mapping circuitry (110). The requestor (104) issues block access requests (1) to a target peripheral (112). The target peripheral (112) includes a set of first-in first-out structures (FIFOs) (130) which buffer incoming or outgoing data. The split transaction interconnect (102) has a requestor port (122) coupled to the requestor (104) and a target port (124) coupled to the target peripheral (112). The target port (124) breaks a single block access request from the requestor into multiple smaller access requests (2) for the target peripheral (112), each including a corresponding access address, in which the corresponding access addresses of the multiple smaller access requests access consecutive address locations of the target peripheral (112). The address mapping circuitry (110) maps (3) each of the corresponding access addresses of the multiple smaller access requests generated from the single block access request access to a same register of a first FIFO (130) of the target peripheral (112).

## Description

### Background

### Field

This disclosure relates generally to a data processing system, and more specifically, to a data processing system having a split transaction interconnect in communication with a peripheral FIFO structure.

### Related Art

As silicon geometries continue to shrink, the transistors get faster but the propagation delay across the silicon gets slower. In some current System-on-a-Chips (SoCs), in order to optimize bandwidth, split transaction interconnects are used for connecting elements of the SoCs, such as peripherals, direct memory access (DMA) controllers, processors, memories, etc. Such split transaction interconnects are optimized for transporting large packets of data, in which, for example, address packets for read or write access requests access blocks of data are communicated separately from the return read data packets. In one example, the packets of the split transactions are communicated via a network-on-chip (NOC) which allows point to point access between connected elements of the SoC. However, some peripherals in the SoC may utilize first-in first-out data structures (FIFOs) to buffer incoming or outgoing data, and while such FIFOs can be efficiently emptied or filled by way of traditional single cycle bus interconnects, interfacing such FIFOs with a split transaction interconnect results in overly restrictive bandwidth limitations.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in block diagram form, a read transaction in a data processing system having a split transaction interconnect and a FIFO mirrored memory map, in accordance with one embodiment of the present invention.
FIG. 2 illustrates, in block diagram form, a write transaction in the data processing system having the split transaction interconnect and the FIFO mirrored memory map, in accordance with one embodiment of the present invention.
FIG. 3 illustrates, in diagrammatic form, a more detailed view of the FIFO mirrored memory map of FIGs. 1 and 2, in accordance with an embodiment of the present invention.

### Detailed Description

An SoC having a split transaction interconnect implementing a NOC allows for block read and write transfers to be communicated as data packets over the split transaction interconnect from a requestor of the SoC to a target a device of the SoC. In one embodiment, the target device is a peripheral which utilizes receive and transmit FIFO structures to buffer incoming or outgoing data. The FIFOs may be word-wide, whereas data packets transferred over the split transaction interconnect may contain many words. The split transaction interconnect expects each word in a data packet to have a different access address, and therefore, when the packet is disassembled into word-sized elements at the target port for a peripheral, the access address can be automatically incremented with each element. However, the peripheral FIFO expects every word to be read/written at a same address.

Therefore, in one embodiment, in order to efficiently read multiple data elements from a FIFO to fulfill a block read access request from the requestor or write multiple data elements to a FIFO to fulfill a block write access request from the requestor, a FIFO mirrored memory map is implemented between the target port of the split transaction interconnect and the peripheral to ensure that successive read or write accesses all access a same FIFO register. For example, in the case of read accesses to an Rx FIFO, access to consecutive access addresses are all mapped (i.e. directed) to a same FIFO pop register of the Rx FIFO so as to pop multiple data elements from the Rx FIFO. The popped multiple data elements can then be combined and communicated over the split transaction interconnect as a block response to the block read access request. Similarly, in the case of write accesses to a Tx FIFO, access to consecutive access addresses are all mapped (i.e. directed) to a same FIFO push register of the Tx FIFO so as to push multiple data elements of a write data block corresponding to the block write access request onto the Tx FIFO.

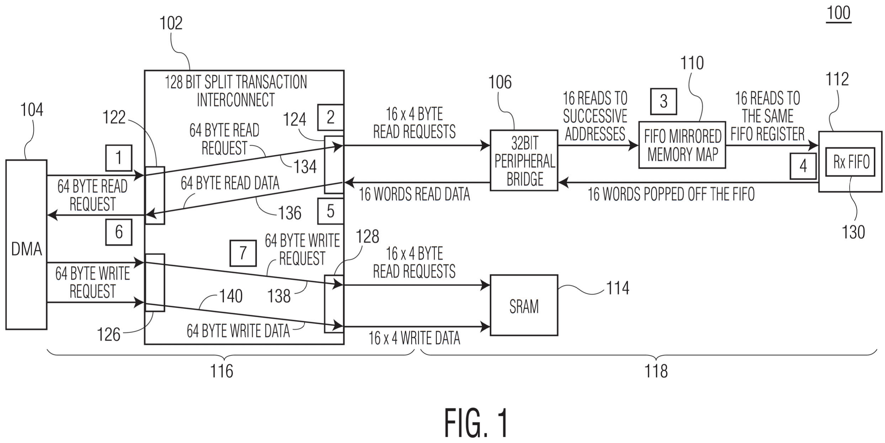

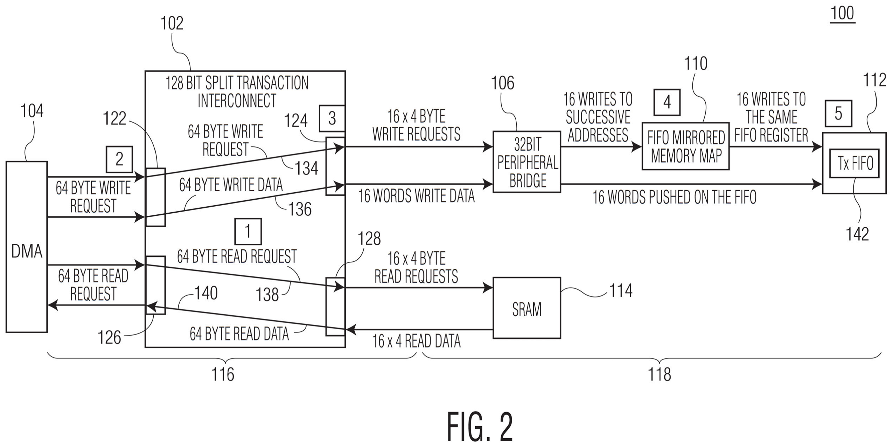

FIG. 1 illustrates a data processing system 100, in accordance with one embodiment of the present invention. Data processing system 100 may be implemented as an SoC and is therefore referred to herein as SoC 100 (or may also be referred to as an integrated circuit (IC)). In the illustrated embodiment, SoC 100 is implemented as a single integrated circuit. In the illustrated embodiment, SoC 100 includes a split transaction interconnect 102, a direct memory access controller (DMA) 104, a peripheral bridge circuit 106, a memory 114, and a peripheral 112. In the illustrated embodiment, memory 114 is implemented as a static random access memory (SRAM) but can be any type of memory which allows writes. Peripheral 112 may be any type of peripheral which includes transmit and receive storage circuitry modelled as FIFOs, thus including a receive FIFO structure (Rx FIFO) configured to buffer (i.e. store) incoming data (e.g. which may be received from a source external to SoC 100) and a transmit FIFO structure (Tx FIFO) configured to store outgoing data to be transmitted (e.g. external to SoC 100). The FIFO structures can be implemented as known in the art, such as through the use of registers, along with logic used to implement the push and pop functions of the FIFO structures (in which a pop function removes the oldest data from the head of the FIFO and a push function adds the newest data to the tail of the FIFO). In one embodiment, each FIFO structure includes a pop register configured to store the head of the FIFO, corresponding to the next data element to be popped (i.e. removed) from the FIFO, and a push register configured to store the tail of the FIFO, corresponding to a data element last pushed (i.e. added) into the FIFO. In the illustrated embodiment of FIG. 1, peripheral 112 includes an Rx FIFO 130 (and, as will be described below in FIG. 2, peripheral buffer 112 also includes a Tx FIFO 142).

Peripheral bridge circuit 106 provides an interface between split transaction interconnect 102 and one or more peripherals. Peripheral bridge circuit 106 can interface to any number and type of peripherals, in which each peripheral implements a set of FIFOs configured to buffer incoming or outgoing data (e.g. a Rx or Tx FIFO, respectively, or may include both Rx and Tx FIFOs). Examples of such peripherals includes a Universal Asynchronous Receiver/Transmitter (UART), a Serial Peripheral Interface (SPI), an Inter-Integrated Circuit (I2C), Inter-IC Sound (I2S), analog-to-digital converter (ADC), etc.

In one embodiment, SoC 100 includes any number of requestors (such as, e.g., DMA 104) which provide read and write requests to a target device which responds to the requests (such as, e.g., memory 114 or peripheral 112). Each of the requestors and target devices are coupled to split transaction interconnect 102, in which split transaction interconnect 102 may implement a network-on-a-chip (NoC) which communicates packets of information between the requestors and target devices. In the illustrated embodiment, split transaction interconnect 102 includes a first requestor port 122 coupled to DMA 104, a second requestor port 126 coupled to DMA 104, a first target port coupled to peripheral bridge 106, and a second target port 128 coupled to memory 114. Split transaction interconnect 102 is configured to communicate access requests and data between requestor ports and target ports.

In the illustrated embodiment, split transaction interconnect 102 communicates split transactions in which address and associated controls for access requests (e.g. for read or write access requests) are communicated separately from the data (e.g. the provided write data or the returned read data). Therefore, split transaction interconnect 102 includes an address bus which communicates addresses and associated control signals for access requests, and a data bus which communicates write data for write access requests or read data in response to read access requests. The requestors coupled to split transaction interconnect 102 are capable of supporting block data transfers in which blocks of data are read or written with each read or write request, respectively. For example, these block transfers can be implemented by the requestors as burst based transactions in which, for each access request, rather than providing an address for each location of the block being accessed, only a starting address is provided. The burst based transactions may also include additional control information such as an identifier of the peripheral or target port being accessed, whether the burst access is for a read or write access, and the size of the data block being accessed (e.g. how many bytes are being accessed). Depending on the implementation of the burst transactions, additional control information may be provided. Since the address and controls are communicated separately from the data, a requestor is also capable of issuing multiple outstanding requests via split transaction interconnect 102, and target devices can provide out of order responses to the requests. (In one embodiment, split transaction interconnect 102 can be implemented with the AXI bus protocol, which corresponds to the third generation of the Advanced Microcontroller Bus Architecture (AMBA) interface defined by ARM).

Each block transfer over split transaction interconnect 102 is initiated by a requestor providing an access request (also referred to as a block access request), via a requestor port, to split transaction interconnect 102. The block access request can either be a read or write access request to a target device coupled to a target port of interconnect 102, in which the access request identifies the target device and includes a starting address of the block transfer. The starting address as well as any associated control signals can be communicated through split transaction interconnect 102 via the address bus to the appropriate target port for the target device. Note that, in one embodiment, the address and associated control information for an access request can be referred to as an address packet which is communicated through the NoC implemented by split transaction interconnect 102. For a write access request, a block of write data is provided via the requestor port to the appropriate target port via the data bus, and for a read access request, a block of read data is returned to the requestor from the target device in response to the read access request via the target port and data bus back to the requestor port. Note that, in one embodiment, the block of write data or the block of read data can be referred to as a data packet which is communicated through the NoC implemented by split transaction interconnect 102.

Note that SoC 100 can include more or fewer elements than those illustrated in FIG. 1. For example, although only one requestor (DMA 104) is illustrated, SoC 100 may include any number of requestors. Similarly, SoC 100 may include any number of target devices (such as memory 113 or the peripherals coupled to peripheral bridge 106). Therefore, split transaction interconnect 102 can include any number of requestor ports and target ports, as needed, to implement the NOC. Also, although peripheral bridge 106 is illustrated as being coupled to one peripheral (peripheral 112), peripheral bridge 106 may be coupled to any number (N) of peripherals. Therefore, peripheral bridge 106 may operate as a 1:N demultiplexer (DEMUX) in which requests received by peripheral bridge 106 are routed to the appropriate buffer within the appropriate peripheral. Note that, in an alternate embodiment, in which there is only one peripheral coupled to peripheral bridge 106, the peripheral can instead be coupled directly to target port 124, in which peripheral bridge 106 may not be present.

In the illustrated embodiment, requestor ports 122 and 126 receive access requests for block transfers from DMA 104 and communicates each request to the appropriate target port indicated by the request. In one embodiment, for each target port, the properties of the target port may be specified as to the type of transaction accepted by the target device coupled to the target port. For example, in one embodiment, each access request from DMA 104 corresponds to a block transfer of X bytes, in which X can be any number of bytes as supported by DMA 104. In the illustrated embodiment, for ease of explanation, it will be assumed that X is 64 such that each access request corresponds to a block transfer of 64 bytes. In alternate embodiments, DMA 104 or other requestor of SOC 100 may implement a different number of bytes for each block transfer (in which, in one embodiment, for each access request, the number of bytes or size of the block can be communicated with the access request). In one embodiment, memory 114 supports a maximum of 4 bytes per transaction. Target port 128 for memory 114 is aware of this information and is thus configured to break each incoming 64-byte block access request into 16 separate 4-byte transactions. For example, target port 128 breaks each single read or write block access request into 16 separate 4-byte read or write requests and transmits the 16 4-byte read or write requests to memory 114. In this example, each read or write access request to memory 114 includes an access address which accesses 4-byte locations of memory 114 and corresponding control signals. For a write access request, 16 separate 4-byte write data elements are provided to memory 114, and for a read access request, 16 separate 4-byte read data elements are returned from memory 114 to target port 128. Target port 128 then combines the 16 4-byte read data elements and transfers them as a block back to DMA 104 via requestor port 126.

In the illustrated embodiment, peripheral bridge 106 is a 32-bit peripheral bridge which is capable of handling a maximum of 1 word (e.g. 4 bytes in which 4 bytes = 32 bits) of data per transaction. Target port 124 for peripheral bridge 106 is aware of this information and, similar to target port 128 described above, target port 124 is also configured to break each incoming 64-byte block access request into 16 separate 4-byte requests. Peripheral bridge 106 communicates with the Rx FIFO or Tx FIFO of peripheral 112 via a FIFO mirrored memory map 110, in which for each of the Rx FIFO and Tx FIFO of peripheral 112, only one word (e.g. 4 bytes) of data is popped from or pushed to the Rx or Tx FIFO at a time. Therefore, as will be described in more detail below, FIFO mirrored memory map 110 allows for more efficient data transfers by enabling block transfers of transmitted data by split transaction interconnect 102, via peripheral bridge 106, with the FIFOs of peripheral 112.

Note that the bit and byte values used for peripheral bridge 106 and memory 114 are merely examples, in which each target device may be designed to handle a different number of maximum bytes per transaction (which may be greater than or fewer than 4 bytes). Also, note that the width of the Rx and Tx FIFOs in the illustrated embodiments is one word such that a one word data element is popped or pushed with each access to pop register 218 or push register 216, respectively. In alternate embodiments, the number of words for each data element popped from or pushed to a Rx or Tx FIFO each time may be more or fewer than 1 word. In the illustrated embodiment, it is also assumed that each word is defined as 4 bytes (32-bits), but other embodiments may have each word being defined as having fewer bytes (e.g. 2 bytes) or more bytes (e.g. 8 bytes).

With respect to target port 124 and peripheral bridge 106, a read block access request will be described in reference to FIG. 1 while a write block access request will be described in reference to FIG. 2. In each of FIGs. 1 and 2, number labels in boxes indicate an ordered list of operations which occur within SoC 100, in accordance with various examples of operation, in which FIG. 1 includes operations 1-7 and FIG. 2 includes operations 1-5. (Note that the numbered operations are not exhaustive lists of operations, but are used to help described an ordering of operations for example transactions of SoC 100). Also, the examples of FIGs. 1 and 2 assume that DMA 104 is the requestor issuing 64-byte block access requests through split transaction interconnect 102 to port 124 (for access to peripheral 112) and port 128 (for access to memory 114).

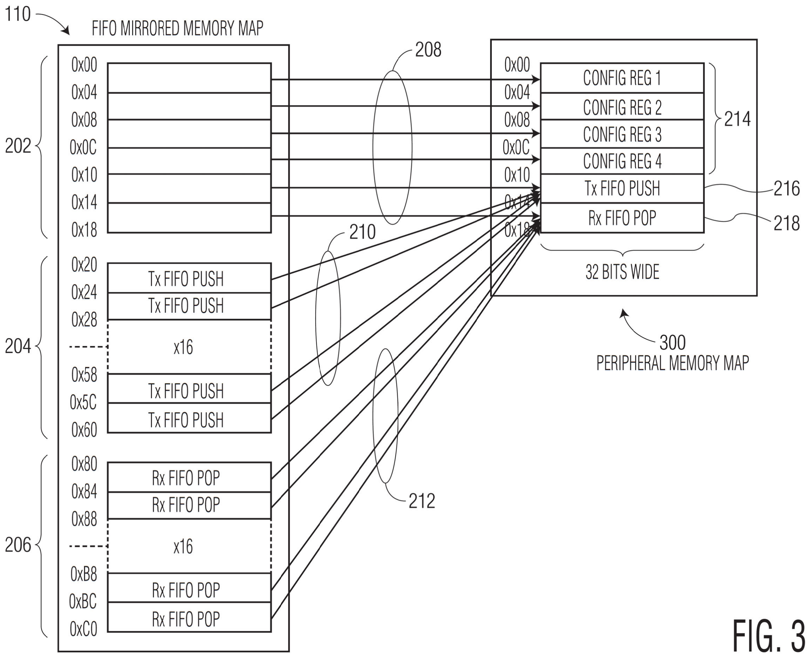

Referring to FIG. 1, DMA 104 issues a 64-byte read access request to obtain receive data from the Rx FIFO of a target peripheral (such as by accessing Rx FIFO 130 of peripheral 112, which may correspond to, e.g., an I2S peripheral). In this case, the peripheral 112 obtains data and stores this obtained data in Rx FIFO 130, in which the received data can be accessed by SoC 100 accessing an Rx FIFO pop register of Rx FIFO 130. However, as described above, each pop access from the Rx FIFO obtains only one word. Referring to operation 1 of FIG. 1, the block read access request from DMA 104 is issued to split transaction interconnect 102 via port 122. This block read access request includes, for example, a starting read address for the block read, and identifies the start of a FIFO mirrored address region of FIFO memory map 110 (to be described in more detail in reference to FIG. 3 below) which mirrors to a FIFO pop register of the target peripheral (e.g. to a FIFO pop register of Rx FIFO 130 of peripheral 112). This block read access request (also referred to as an address packet) is routed, via address bus 134, to port 124 (labeled as operation 2). At port 124, the 64-byte read access request is broken into 16 4-byte read access requests, as explained above, in which each of the 16 4-byte read access requests accesses 4 bytes (one word) of read data. These 16 4-byte access requests are provided to peripheral bridge 106, in which peripheral bridge 106 routes the request, via FIFO mirrored memory map 110, to the appropriate peripheral (e.g. peripheral 112, corresponding to the target peripheral).

The separate 4-byte read access requests are provided via FIFO mirrored memory map 110 (also referred to as a gasket) to access Rx FIFO 130 of peripheral 112. Since the 16 4-byte read access requests are 4-byte portions of a block read access request, they are accessed from 16 successive access addresses. Therefore, each 4-byte read access request generated at port 124 includes an access address, in which the access addresses are 16 consecutive 4-byte addresses starting with the starting address identified by the issued block read access request. As illustrated by operation 3 of FIG. 1, these 16 consecutive read access requests are provided to FIFO mirrored memory map 110 which ensures that all 16 read access request to the successive 4-byte addresses are routed to the same 4-byte Rx FIFO pop register of Rx FIFO 130. Therefore, as illustrated by operation 4, the 16 consecutive read accesses are all read from the same Rx FIFO register.

FIG. 3 illustrates, in diagrammatic form, a more detailed view of FIFO mirrored memory map 110 along with a peripheral memory map 300 corresponding to the memory map of peripheral 112, in accordance with one embodiment of the present invention. Referring first to peripheral memory map 300, peripheral 112 includes a set of configuration registers 214, a Tx FIFO push register 216, and an Rx FIFO pop register 218. The configuration registers can store any type of configuration information needed for peripheral 112, and although 4 registers are illustrated (config reg 1-4), any number of configuration registers can be used. Further, the configuration registers can be designed to be any size and can have any number and type of fields configured to store configuration information. In the illustrated embodiment, Rx FIFO pop register 218 corresponds to the next data element to be popped from the head of a receive FIFO (e.g. Rx FIFO 130), representing a 4-byte value of received data by the corresponding peripheral (e.g. peripheral 112). Each time the Rx FIFO pop register 218 is read, a next data element (a new head) is moved into pop register 218 of Rx FIFO 130. Similarly, Tx FIFO pop register 216 corresponds to the latest data element pushed into a transmit FIFO (e.g. Tx FIFO 142), representing a 4-byte value of transmit data to the corresponding peripheral (e.g. peripheral 112). Therefore, each time Tx FIFO push register 216 is written, a next data element is pushed onto a corresponding Tx FIFO (such as a Tx FIFO 142 of peripheral 112, to be described in reference to FIG. 2 below).

Note that in the illustrated embodiment, it is assumed that each data element popped from or pushed to the FIFOs are 4-byte data elements, however, in alternate embodiment, they may be of a different size, and the push and pop registers would be sized accordingly to store the data elements. In the illustrated embodiment, the set of four configuration registers are located in peripheral 112 starting at address location 0x00 (in which a "0x" preceding a value indicates the value is in hexadecimal form). Tx FIFO push register 216 is located at address location 0x14, and Rx FIFO pop register 218 is located at address location 0x18. Also note that the registers of peripheral memory map 300 can be implemented as any type of storage circuitry.

FIFO mirrored memory map 110 corresponds to peripheral memory map 300 such that FIFO mirrored memory map 100 receives an access address and maps the received access address to peripheral memory map 300. In one embodiment, a first set of access addresses 202 are pass-through addresses which pass through to peripheral 112 without modification, a second set of access addresses 204 all mirror Tx FIFO push register 216, and a third set of access addresses 206 all mirror Rx FIFO pop register 218. Therefore, for access requests (for reads or writes) which have access addresses within 0x00 - 0x18, the access addresses are provided as unmodified addresses 208 to access addresses 0x00 - 0x18, respectively, of peripheral 112 with a one-to-one mapping. In contrast, for access requests (for reads or writes) which have a corresponding access address within 0x20 - 0x60 (corresponding to 16 consecutive 4-byte addresses within second set of addresses 204), the access address is provided as a modified address 210 to access address 0x14. That is, any address within 0x20 - 0x60 is mapped to the same push register (e.g. is modified to access Tx FIFO push register 216). Similarly, for access requests (for reads or writes) which have a corresponding access address within 0x80 - 0xC0 (corresponding to 16 consecutive 4-byte addresses within third set of addresses 206), the access address is provided as a modified address 212 to access address 0x18. That is, any address within 0x80 - 0xC0 is mapped to the same pop register (e.g. is modified to access Rx FIFO pop register 218). In this manner, with the multiple-to-one mapping for addresses 204 mapped to Tx FIFO push register 216 and multiple-to-one mapping for addresses 206 to Rx FIFO pop register 218, 16 consecutive read or write accesses can be made to the same pop or push register. (Note that addresses 204 may be referred to as a FIFO mirrored address region for the target peripheral which mirrors to Rx FIFO pop register 218, and addresses 206 may be referred to as a FIFO mirrored address region for the target peripheral which mirrors to Tx FIFO push register 216.)

In the illustrated embodiment, the 16 consecutive 4-byte addresses in each of ranges 204 and 206 represent the maximum number of words that can be pushed or popped from the FIFOs with one split transaction interconnect data packet. The depth of the corresponding FIFO must be greater than this maximum number of words to prevent overflow/underflow of the FIFO while the spit transaction inter connect transfer request is pending. The split transaction interconnect can request any size of packet transfer that is less than or equal to this maximum number. For the illustrated embodiment of 16 successive 4-byte addresses, the block transfer could be, e.g., 64 bytes, 60 bytes, 56 bytes, 32 bytes, 16 bytes, 8 bytes, or a single 4-byte access. In this embodiment, the Tx FIFO and Rx FIFO, respectively, each have a depth of greater than 16 words. That is, each FIFO is capable of storing at least 16 word-sized data elements. Note also that separate consecutive addresses which correspond to a block access refers to addresses which access contiguous data elements in memory. For example, since each FIFO stores word-sized data elements (i.e. 4 bytes of data), consecutive or successive addresses are separates by 4 bytes such that, e.g., 0x80, 0x84, 0x88 are considered consecutive addresses. If each FIFO stored half-word-sized elements (i.e. 2 bytes of data), consecutive or successive addresses are separated by 2 bytes, such that, e.g., 0x80, 0x82, 0x84 would be considered consecutive addresses.

In one embodiment, mirrored memory map 110 is implemented with address mapping circuitry configured to selectively modify a received access address, as needed, in accordance with the address mappings provided by mirrored memory map 110. The address mapping circuitry may include any digital logic to implement the address mappings. While the illustrated embodiment of FIG. 3 illustrates the mapping of 16 consecutive word addresses to each of the push and pop registers of peripheral memory map 300, mirrored memory map 110 may map more or fewer than 16 consecutive word addresses, depending on depth of the corresponding FIFOs. Also, note that a size of each data element pushed into or popped from the corresponding FIFO can be different based on the width of the FIFOs. That is, mirrored memory map 110 can be used with any width or depth of FIFO, and can be used to interface any peripheral with a FIFO structure. Although illustrated as separate, FIFO mirrored memory map 110 may also be included within peripheral bridge 106 or within peripheral 130.

Referring back to the example of FIG. 1, when peripheral bridge 106 provides 16 read accesses to consecutive (i.e. successive) addresses corresponding to the block read access request to FIFO mirrored memory map 110, 16 successive read accesses to Rx FIFO pop register 218 of Rx FIFO 130 are generated. That is, as illustrated with operation 4, all 16 read accesses are performed to the same access address (the access address corresponding to Rx FIFO pop register 218, e.g., 0x18), such that for each read access of Rx FIFO pop register 218, a next read data element is popped (removed) from the Rx FIFO. Therefore, the result of these 16 read accesses to the pop register returns the 16 popped data elements (e.g. 16 words of read data) back though peripheral bridge 106 to port 124 of split transaction interconnect 102. Port 124 combines the received 16 words of read data into a 64-byte block of read data (labeled as operation 5), provided in response to the 64-byte block read access request. The 64-byte block of read data (also referred to as a data packet) is routed on data bus 136 through split transaction interconnect 102 back to DMA 104 via port 122, labeled as operation 6.

In one embodiment, DMA 104 can then issue a block write access request for 64 bytes of write data via port 126, through the address and data buses, to port 128. The write access request can be provided with a starting address and a target identifying memory 114 via address bus 138 and the corresponding write data can be provided via data bus 140. At port 128, the 64-byte write request can be split into 16 4-byte write requests, at consecutive access addresses within memory 114.

In another example, referring to FIG. 2, DMA 104 issues a block read access request to obtain read data from memory 114. DMA 104 issues the 64-byte read access request to split transaction interconnect 102 via port 126, in which the read request is transmitted via address bus 138 to port 128 (labeled as operation 1). The read access request can be provided with a starting address and a target identifying memory 114. At port 128, the 64-byte read request is split into 16 4-byte read requests, at consecutive access addresses within memory 114. Memory 114 returns 16 4-byte elements of read data to port 128. Port 128 reassembles the 16 4-byte data elements into a 64-byte block of read data which is transmitted back to port 126 via address bus 138. The block of read data is then returned to DMA 104 in response to its block read access request.

As illustrated by operation 2, DMA 104 then issues a write block access request to provide transmit data to the Tx FIFO of a target peripheral (such as by accessing Tx FIFO 142 of peripheral 112, which may correspond to, e.g., an I2S peripheral). In this case, the target peripheral receives the transmit data for storage into Tx FIFO 142, in which the transmit data can be provided by SoC 100 by writing to the Tx FIFO push register (e.g. Tx FIFO push register 216) of Tx FIFO 142. However, as described above, each push into the Tx FIFO only pushes one data element (e.g. one word). Referring to operation 2 of FIG. 2, the write block access request from DMA 104 is issued to split transaction interconnect 102 via port 122. This write block access request includes, for example, a starting read address for the block write, and identifies the start of FIFO mirror address region 204 of FIFO memory map 110 which mirrors to a FIFO push register of the target peripheral (e.g. to FIFO push register 216 of Tx FIFO 142 of peripheral 112). This block write access request (also referred to as an address packet) is routed, via address bus 134, to port 124 (labeled as operation 3). The write block access request from DMA 104 also includes corresponding write data which is provided by DMA 104, via port 122, as a 64-byte block of write data. The block of write data (also referred to as a data packet) is also routed, via data bus 136, to port 124. At port 124, the 64-byte write access request is broken into 16 4-byte write access requests, as explained above, and the 64-byte block of write data is broken into 16 words of write data, such that each 4-byte write access request has a corresponding word of write data. These 16 4-byte access requests, along with the 16 words of write data, are provided to peripheral bridge 106, in which peripheral bridge 106 routes the request via FIFO memory map 100 to the appropriate peripheral (e.g. peripheral 112, corresponding to the target peripheral).

The separate 4-byte write access requests are provided via FIFO mirrored memory map 110 to access Tx FIFO 142 of peripheral 112. Since the 16 4-byte read access requests are portions of a block write access request, they correspond to accesses of 16 successive addresses. Therefore, each 4-byte write access request generated at port 124 includes an access address, in which the access addresses are 16 consecutive addresses starting with the starting address identified by the issued block write access request. As illustrated by operation 4 of FIG. 2, these 16 consecutive write access requests are provided to FIFO mirrored memory map 110 which ensures that all 16 write access requests to the successive 4-byte addresses are routed to the same Tx FIFO pop register. Therefore, as a result, the 16 successive write accesses to consecutive access addresses are performed as 16 write accesses to Tx FIFO push register 216, in which, for each write access to Tx FIFO push register 216, a next write data element of the write data is pushed (i.e. added) to Tx FIFO push register 216 so as to consecutively push 16 data elements onto Tx FIFO 142.

Note that, as illustrated in FIGs. 1 and 2, a latency 116 between issuing a block read or write access request through split transaction interconnect 102 is much greater (e.g. 10 times greater) than a latency 118 between split transaction interconnect 102 and peripheral 112. However, the use of FIFO mirrored memory map 110 allows for efficiently performing reads or writes to multiple consecutive addresses using single cycle register accesses of the Rx FIFO or TX FIFO of the peripheral. Therefore, although latency 116 for the block transactions is greater than latency 118, FIFO mirrored memory map 110 provides an efficient mechanism for successively reading or writing multiple words at consecutive address locations within a FIFO-based peripheral, thus amortizing the cost of latency 118 across multiple single cycle register accesses. In this manner, the efficiency of split transaction interconnect 102 for block transfers may be maintained while efficiently filling or emptying a peripheral FIFO by allowing the same FIFO push or pop register to be read or written with a series of contiguous addresses corresponding to the block transfer.

As used herein, the term "bus" is used to refer to a plurality of signals or conductors which may be used to transfer one or more various types of information, such as data, addresses, control, or status. The conductors as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention has been described with respect to specific conductivity types or polarity of potentials, skilled artisans appreciated that conductivity types and polarities of potentials may be reversed.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Some of the above embodiments, as applicable, may be implemented using a variety of different information processing systems. For example, although FIGs. 1 and 2 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Also for example, in one embodiment, the illustrated elements of system 100 are circuitry located on a single integrated circuit or within a same device. Alternatively, system 100 may include any number of separate integrated circuits or separate devices interconnected with each other. For example, memory 110 may be located on a same integrated circuit as requestor 104 or on a separate integrated circuit or located within another peripheral or slave discretely separate from other elements of system 100. Peripheral 112 may also be located on a separate integrated circuit or device.

A data processing system includes a requestor, a split transaction interconnect, and address mapping circuitry. The requestor issues block access requests to a target peripheral. The target peripheral includes a set of first-in first-out structures (FIFOs) which buffer incoming or outgoing data. The split transaction interconnect has a requestor port coupled to the requestor and a target port coupled to the target peripheral. The target port breaks a single block access request from the requestor into multiple smaller access requests for the target peripheral, each including a corresponding access address, in which the corresponding access addresses of the multiple smaller access requests access consecutive address locations of the target peripheral. The address mapping circuitry maps each of the corresponding access addresses of the multiple smaller access requests generated from the single block access request access to a same register of a first FIFO of the target peripheral.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, SoC 100 may include different types of requestors and different target devices which utilize transfer and receive FIFOs to buffer data. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

The following are various embodiments of the present invention. Note that any of the aspects below can be used in any combination with each other and with any of the disclosed embodiments.

In an embodiment, a data processing system includes a requestor configured to issue block access requests to a target peripheral, wherein the target peripheral includes a set of first-in first-out structures (FIFOs) configured to buffer incoming or outgoing data; a split transaction interconnect having a requestor port coupled to the requestor and a target port coupled to the target peripheral, wherein the target port is configured to break a single block access request from the requestor into multiple smaller access requests for the target peripheral, each including a corresponding access address, in which the corresponding access addresses of the multiple smaller access requests access consecutive address locations of the target peripheral; and address mapping circuitry configured to map each of the corresponding access addresses of the multiple smaller access requests generated from the single block access request access to a same register of a first FIFO of the target peripheral. In one aspect, the single block access request corresponds to a read block access request and the same register of the first FIFO corresponds to a pop register of a receive FIFO, and the address mapping circuitry is configured to direct each of the multiple smaller access requests generated form the read block access request to read a single popped data element from the pop register of the receive FIFO. In a further aspect, the target port is configured to combine the single popped data elements read by the multiple smaller access requests into a block of read data, and the split transaction interconnect is configured to return the block of read data to the requestor in response to the single block access request. In another aspect of the above embodiment, the single block access request corresponds to a write block access request and the same register of the first FIFO corresponds to a push register of a transmit FIFO, wherein the requestor is configured to provide a block of write data corresponding to the write access request via the requestor port to the target port, and the target port is further configured to break the block of write data into multiple write data elements corresponding one-to-one to the multiple smaller access requests. In a further aspect, the address mapping circuitry is configured to direct each of the multiple smaller access requests generated form the write block access request to write a single corresponding data element of the multiple write data elements to the push register of the transmit FIFO. In yet another aspect, the address mapping circuitry is configured to receive the corresponding access addresses from the target port of the split transaction interconnect and selectively modify each of the received corresponding access addresses, wherein for a first range of access addresses, the address mapping circuitry is configured to map each corresponding access address in the first range to the same register of the first FIFO. In a further aspect, for a second range of access addresses, the address mapping circuitry is configured to provide each corresponding access address in the second range unmodified to the target peripheral. In another further aspect, the first FIFO is configured as a receive FIFO of the target peripheral, and the address mapping circuitry is configured to map each access address in the first range to a same pop register of the receive FIFO, wherein the pop register of the receive FIFO is configured to store a next data element to be popped from the receive FIFO. In yet a further aspect, the next data element to be popped from the receive FIFO corresponds to an oldest data element of the receive FIFO. In another yet further aspect, the address mapping circuitry is configured to map each access address of a second range of access addresses to a same register of a second FIFO of the target peripheral, wherein the second FIFO is configured as a transmit FIFO, and the address mapping circuitry is configured to map each access address of the second range to a same push register of the transmit register. In a further aspect, the push register of the transmit FIFO is configured to receive a next data element to be pushed into the transmit FIFO. In yet another aspect of the above embodiment, the block access request specifies only one access address for the block access request, wherein the one access address indicates a starting address of a block of consecutive address locations configured to provide read data or store write data in response to the block access request.

In another embodiment, a data processing system includes a requestor configured to issue block access requests to a target peripheral, wherein the target peripheral includes a set of first-in first-out structures (FIFOs), including a receive FIFO configured to buffer incoming data and a transmit FIFO configured to buffer outgoing data; a split transaction interconnect having a requestor port coupled to the requestor and a target port coupled to the target peripheral, wherein the target port is configured to break a single block access request from the requestor into multiple smaller access requests for the target peripheral, each including a corresponding access address, in which the corresponding access addresses of the multiple smaller access requests access consecutive address locations of the target peripheral; and address mapping circuitry configured to receive access addresses from the target port of the split transaction interconnect and selectively modify each of the received access addresses. For a first range of access addresses, the address mapping circuitry is configured to map each access address in the first range to a same pop register of the receive FIFO to pop a next read data element from the receive FIFO, and for a second range of access addresses, the address mapping circuitry is configured to map each access address in the second range to a same push register of the transmit FIFO to push a next write data element into the transmit FIFO. In one aspect of the another embodiment, for a third range of access addresses, the address mapping circuitry is configured to provide each access address in the third range unmodified to the target peripheral. In a further aspect, the single block access request corresponds to a read block access request, and the address mapping circuitry is configured to direct each of the multiple smaller access requests to the pop register of the receive FIFO to read a single popped data element from the pop register of the receive FIFO. In a further aspect, the target port is configured to combine the single popped data elements read by the multiple smaller access requests into a block of read data, and the split transaction interconnect is configured to return the block of read data to the requestor in response to the single block access request. In another aspect of the another embodiment, the single block access request corresponds to a write block access request and the requestor is configured to provide a block of write data corresponding to the write access request to the requestor port, and the target port is further configured to break the block of write data into multiple write data elements corresponding one-to-one to the multiple smaller access requests. In a further aspect, the address mapping circuitry is configured to direct each of the multiple smaller access requests generated form the write block access request to write a single corresponding data element of the multiple write data elements to the push register of the transmit FIFO. In yet another aspect of the another embodiment, the block access request specifies only one access address for the block access request, wherein the one access address indicates a starting address of a block of consecutive address locations configured to provide read data or store write data in response to the block access request. In yet another aspect, the data processing system further includes a peripheral bridge coupled between the target port and the peripheral, wherein the address mapping circuitry is configured to receive the access addresses from the target port via the peripheral bridge.

## Claims

1. A data processing system comprising:
a requestor configured to issue block access requests to a target peripheral, wherein the target peripheral includes a set of first-in first-out structures (FIFOs) configured to buffer incoming or outgoing data;
a split transaction interconnect having a requestor port coupled to the requestor and a target port coupled to the target peripheral, wherein the target port is configured to break a single block access request from the requestor into multiple smaller access requests for the target peripheral, each including a corresponding access address, in which the corresponding access addresses of the multiple smaller access requests access consecutive address locations of the target peripheral; and
address mapping circuitry configured to map each of the corresponding access addresses of the multiple smaller access requests generated from the single block access request access to a same register of a first FIFO of the target peripheral.

2. The data processing system of claim 1, wherein the single block access request corresponds to a read block access request and the same register of the first FIFO corresponds to a pop register of a receive FIFO, and the address mapping circuitry is configured to direct each of the multiple smaller access requests generated form the read block access request to read a single popped data element from the pop register of the receive FIFO.

3. The data processing system of claim 2, wherein the target port is configured to combine the single popped data elements read by the multiple smaller access requests into a block of read data, and the split transaction interconnect is configured to return the block of read data to the requestor in response to the single block access request.

4. The data processing system of claim 1, wherein the single block access request corresponds to a write block access request and the same register of the first FIFO corresponds to a push register of a transmit FIFO, wherein the requestor is configured to provide a block of write data corresponding to the write access request via the requestor port to the target port, and the target port is further configured to break the block of write data into multiple write data elements corresponding one-to-one to the multiple smaller access requests.

5. The data processing system of claim 4, wherein the address mapping circuitry is configured to direct each of the multiple smaller access requests generated form the write block access request to write a single corresponding data element of the multiple write data elements to the push register of the transmit FIFO.

6. The data processing system of any preceding claim, wherein the address mapping circuitry is configured to receive the corresponding access addresses from the target port of the split transaction interconnect and selectively modify each of the received corresponding access addresses, wherein for a first range of access addresses, the address mapping circuitry is configured to map each corresponding access address in the first range to the same register of the first FIFO.

7. The data processing system of claim 6, wherein, for a second range of access addresses, the address mapping circuitry is configured to provide each corresponding access address in the second range unmodified to the target peripheral.

8. The data processing system of claim 6 or 7, wherein the first FIFO is configured as a receive FIFO of the target peripheral, and the address mapping circuitry is configured to map each access address in the first range to a same pop register of the receive FIFO, wherein the pop register of the receive FIFO is configured to store a next data element to be popped from the receive FIFO.

9. The data processing system of claim 8, wherein the next data element to be popped from the receive FIFO corresponds to an oldest data element of the receive FIFO.

10. The data processing system of claim 8 or 9, wherein the address mapping circuitry is configured to map each access address of a second range of access addresses to a same register of a second FIFO of the target peripheral, wherein the second FIFO is configured as a transmit FIFO, and the address mapping circuitry is configured to map each access address of the second range to a same push register of the transmit register.

11. The data processing system of claim 10, wherein the push register of the transmit FIFO is configured to receive a next data element to be pushed into the transmit FIFO.

12. The data processing system of any preceding claim, wherein the block access request specifies only one access address for the block access request, wherein the one access address indicates a starting address of a block of consecutive address locations configured to provide read data or store write data in response to the block access request.
